# EUROPÄISCHE PATENTSCHRIFT

(11) **EP 0 751 047 B1**
(45) Veröffentlichungstag und Bekanntmachung des Hinweises auf die Patenterteilung: **07.01.1999**
(21) Anmeldenummer: 96109857.1
(22) Anmeldetag: 19.06.1996
(51) Int. Cl.: B60R 21/22, B60R 21/20

(54) **An einem Fahrzeugsitz angeordneter Seiten-Airbag**
Side air bag arranged in a vehicle seat
Sac gonflable latèral disposé dans un siège de véhicule

(30) Priorität: 30.06.1995 DE 29510608 U
(43) Veröffentlichungstag der Anmeldung: 02.01.1997
(73) Patentinhaber: ADAM OPEL AG, 65423 Rüsselsheim (DE)
(72) Erfinder: Schütt, Karl-Peter, Dipl.-Ing., 65428 Rüsselsheim (DE); Göcke, Eberhard, Dipl.-Ing., 65428 Rüsselsheim (DE)
(74) Vertreter: Kümpfel, Heinz, Dipl.-Ing.

(56) Entgegenhaltungen:
- EP-A- 0 611 684
- DE-U- 9 216 516
- GB-A- 2 293 355
- PATENT ABSTRACTS OF JAPAN vol. 016, no. 467 (M-1317), 29.September 1992 & JP-A-04 166452 (IKEDA BUSSAN CO LTD), 12.Juni 1992,
- INGENIEURS DE L'AUTOMOBILE, Nr. 695, März 1995, PARIS, FR, Seiten 48-52, XP000495941 M. J. BARRILLIER: "Choc latéral : contribution de l'habillage intérieur"

## Beschreibung

Die Erfindung betrifft einen an einem Fahrzeugsitz zum Schutz von Insassen angeordneten Seiten-Airbag gemäß dem Oberbegriff des Anspruches 1 (S. zum Beispiel EP-A-0 611 684).

Mit DE 40 18 470 ist ein Seiten-Airbag beschrieben, bei dem ein Luftsack und ein mit einem Lochrohr verbundener Gasgenerator seitlich in der Rücklehne eines Sitzes untergebracht und mit dem Sitzbezugsstoff überdeckt sind. Beim Auslösen des Seiten-Airbags entfaltet sich der Luftsack in einen Raum zwischen dem Fahrzeuginsassen auf dem Sitz und der dem Sitz benachbarten Fahrzeugseite, wobei der Sitzbezugsstoff vom Luftsack zerrissen wird.

Bei einer solchen Konstruktion kann es vorkommen, daß das durch einen seitlichen Unfall hervorgerufene Eindringen von B-Säule und Tür das gezielte Entfalten des Airbags beeinträchtigt. Diese Beeinträchtigung kann so weit gehen, daß der verbleibende Raum zum vollständigen Entfalten des Seiten-Airbags nicht mehr ausreicht und keine optimale Schutzwirkung eintritt.

Die o.g. EP-A-0 611 684 beschreibt eine Luftsackvorrichtung für einen Fahrzeugsitz mit integrierter Kopfstütze, bei der sich der Gassack im aktivierten Zustand zwischen der Kopf-Hals-Partie des Insassen und der benachbarten Seitenstruktur des Fahrzeuges entfaltet. Hier wird auch vorgeschlagen, daß die Austrittsöffnung des Behälters für den Gassack in Fahrtrichtung zeigen kann, so daß sich auch der Gassack in Fahrtrichtung öffnet. Dies ist bei einer Anordnung der Gassackeinheit im Übergangsbereich von Rückenlehne und integrierter Kopfstütze möglich. Soll die Gassackeinheit jedoch in mittlerer Höhe der Seitenfläche der Rückenlehne angeordnet sein, wie ebenfalls hier vorgeschlagen, dann soll sich die Austrittsöffnung für den Gassack nach oben richten.

Auch hier besteht die Gefahr, daß durch einen Seitencrash eindringende Teile der Seitenstruktur des Fahrzeuges die Austrittsöffnung beeinträchtigen und damit die gezielte Entfaltung des Luftsackes verhindern.

Aufgabe der Erfindung ist es daher, einen Seiten-Airbag der eingangs genannten Art zu schaffen, bei dem mit großer Sicherheit ein Einklemmen bzw. Hängenbleiben des Luftsackes beim Entfalten vermieden wird und der Luftsack so zum vorausberechneten Zeitpunkt im aufgeblasenen Zustand mit dem erforderlichen Volumen den vorgegebenen Raum zum Schutz des Fahrzeuginsassen ausfüllt.

Erfindungsgemäß wird diese Aufgabe mit den Merkmalen des Anspruches 1 gelöst.

Eine solche Lösung ermöglicht vorteilhaft den Einbau des Seiten-Airbags in die seitliche Rückenlehne als vorgefertigten Modul, welcher dann mit dem starren Abdeckteil überdeckt ist, welches den Schußkanal für die gezielte Entfaltung des Luftsackes bildet bzw. gewährleistet und lediglich eine Austrittsöffnung für den Luftsack freiläßt.

Diese Austrittsöffnung kann im Normalfall durch einen mit dem Abdeckteil durch Scharniere oder Bänder verbundenen Deckel und/oder durch ein mit einer Reißnaht versehenes Bezugteil der Rückenlehne überdeckt sein.

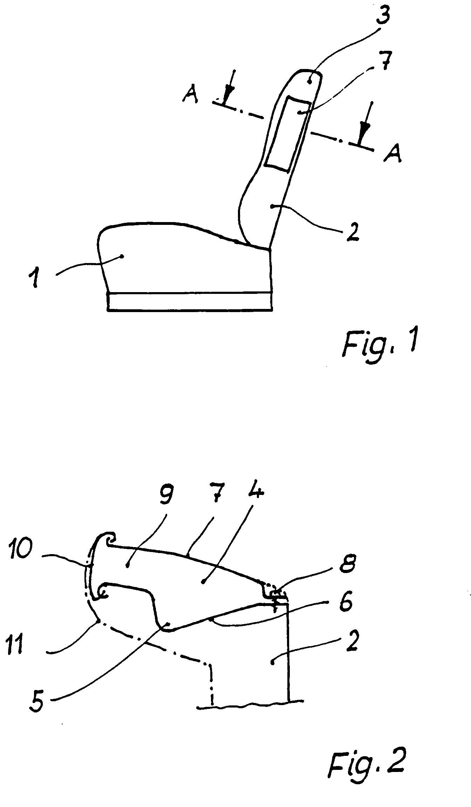

Ein Ausführungsbeispiel der Neuerung ist nachstehend anhand einer Zeichnung näher beschrieben. Es zeigen
- Figur 1:: einen Fahrzeugsitz von der Seite;
- Figur 2:: einen Schnitt entlang der Linie A-A in Figur 1 in vergrößertem Maßstab.

Ein Fahrzeugsitz weist einen Sitzteil 1 und eine Rückenlehne 2 auf. An einer zur Fahrzeugseite weisenden Rückenlehnenseite 3 ist etwa in Höhe des Brustkorbes eines Fahrzeuginsassen ein Raum 4 vorgesehen für die Aufnahme eines Seiten-Airbagmoduls, bestehend aus einem Modulgehäuse, einem darin befindlichen gefalteten Luftsack und einem Gasgenerator. Der Raum 4 wird gebildet von einer Einbuchtung 5 des Lehnenseitenteils 6 und einem Abdeckteil 7, welches mit dem Lehnenseitenteil 6 durch Schrauben 8 oder dergleichen verbunden ist. In Fahrtrichtung des Kraftfahrzeuges verbleibt zwischen dem Lehnenseitenteil 6 und dem Abdeckteil 7 ein Schußkanal 9, der auch bei seitlicher Belastung durch die eindringende Fahrzeugstruktur erhalten bleibt und notfalls sogar den Sitz etwas nach innen verschiebt. Der Schußkanal 9 weist nach vorne eine Austrittsöffnung auf, die durch einen Deckel 10 abgedeckt ist. Über dem Deckel 10 befindet sich zur Dekoration der Bezugsstoff 11 der Rückenlehne 2. Der Deckel 10 ist entweder am Lehnenseitenteil 6 oder am Abdeckteil 7, gegebenenfalls auch am - nicht dargestellten - Airbagmodul scharnierartig befestigt. Der Bezugsstoff 11 ist so am Deckel 10 befestigt, daß er unter Belastung beim Öffnen des Deckels 10 reißt. Ein bei einem Seitencrash ansprechender Sensor aktiviert den Gasgenerator des Seiten-Airbagmoduls, wodurch der Luftsack aufgeblasen wird. Der Luftsack entfaltet sich zielgerichtet durch den Schußkanal 9, drückt den Deckel 10 auf und erstreckt sich in den Raum zwischen Fahrzeuginsassen und Seitenwand des Fahrzeuges. Durch die geschützte und gezielte Entfaltung des Luftsackes durch den Schußkanal 9 wird auch bei erheblichen Fahrzeugdeformationen im Seitenbereich die gewollte Schutzwirkung sichergestellt.

## Patentansprüche

1. An einer Rückenlehne eines Fahrzeugsitzes angeordneter Seiten-Airbag mit einem im Seitenteil der Rückenlehne befindlichen Airbag-Modulgehäuse, einem im Modulgehäuse befindlichen im inaktiven Zustand zusammengefaltetem Luftsack, der bei einem Seitenaufprall durch das von einem Gasgenerator erzeugte Gas aufblasbar ist und der sich im aufgeblasenen Zustand zwischen dem Rumpf eines auf dem Fahrzeugsitz befindlichen Insassen und der Seitenwand des Fahrzeuges erstreckt, wobei die Austrittsöffnung für den Luftsack in Fahrtrichtung zeigt und der Luftsack in Fahrtrichtung entfaltbar ist, **dadurch gekennzeichnet**, daß das Gehäuse des Seitenairbag-Moduls in einem von einer Einbuchtung (5) des Lehnenseitenteils (6) und von einem starren Abdeckteil (7) gebildeten und vom Abdeckteil (7) überdeckten Raum (4) in Höhe des Brustkorbes des Insassen angeordnet ist, das Abdeckteil (7) mit dem Lehnenseitenteil (6) fest verbunden ist und zwischen dem Lehnenseitenteil (6) und dem Abdeckteil (7) ein Schußkanal (9) mit in Fahrtrichtung weisender Austrittsöffnung gebildet ist.

2. Seiten-Airbag nach Anspruch 1, **dadurch gekennzeichnet**, daß die Austrittsöffnung des Schußkanals (9) durch einen mit dem Abdeckteil (7) durch Scharniere oder Bänder verbundenen Deckel (10) und/oder durch ein mit einer Reißnaht versehenes Bezugteil der Rückenlehne (2) überdeckt ist.

## Claims

1. Side airbag arranged on a backrest of a vehicle seat with an airbag module housing located in the side portion of the backrest, an airbag which is located in the module housing and folded up in the inoperative state and which in case of a side collision is inflatable by the gas generated by a gas generator and which in the inflated state extends between the torso of a passenger located on the vehicle seat and the side panel of the vehicle, wherein the outlet opening for the airbag points in the direction of travel and the airbag can be unfolded in the direction of travel, characterised in that the housing of the side airbag module is arranged at the level of the passenger's thorax in a space (4) formed by an indentation (5) of the backrest side portion (6) and by a rigid cover portion (7) and covered by the cover portion (7), the cover portion (7) is rigidly connected to the backrest side portion (6), and between the backrest side portion (6) and the cover portion (7) is formed a firing channel (9) with an outlet opening pointing in the direction of travel.

2. Side airbag according to claim 1, characterised in that the outlet opening of the firing channel (9) is covered by a cover (10) connected to the cover portion (7) by hinges or bands and/or by an upholstery portion of the backrest (2) provided with a tear seam.

## Revendications

1. Coussin gonflable latéral disposé dans un dossier de siège de véhicule comprenant un boîtier de module de coussin gonflable placé dans la partie latérale du dossier de siège, une poche à air qui est disposée dans le boîtier de module, est pliée à l'état inactif, peut être gonflée par le gaz produit par un générateur de gaz en cas de choc latéral et s'étend à l'état gonflé entre le tronc d'un passager se trouvant sur le siège et la paroi latérale du véhicule, l'ouverture de sortie pour le coussin gonflable étant dirigée dans la direction de déplacement et le coussin gonflable pouvant se déplier dans la direction de déplacement, caractérisé par le fait que le boîtier du module de coussin gonflable latéral est disposé dans une chambre (4) qui est formée par une dépression (5) dans la partie latérale de dossier de siège (6) et une partie de couverture (7) rigide et est fermée par la partie de couverture (7), à la hauteur de la cage thoracique du passager, que la partie de couverture (7) est liée fermement à la partie latérale de dossier de siège (6) et qu'un canal d'expulsion (9) avec une ouverture de sortie dirigée dans la direction de déplacement du véhicule est formé entre la partie latérale de dossier de siège (6) et la partie de couverture (7).

2. Coussin gonflable latéral selon la revendication 1, caractérisé par le fait que l'ouverture de sortie du canal d'expulsion (9) est fermée par un couvercle (10) relié à la partie de couverture (7) par des charnières ou des bandes et/ou est recouverte par une partie d'habillage du dossier (2) pourvue d'une couture arrachable.
